# EUROPÄISCHE PATENTSCHRIFT

(11) **EP 1 828 963 B1**
(45) Veröffentlichungstag und Bekanntmachung des Hinweises auf die Patenterteilung: **30.01.2013**
(21) Anmeldenummer: 05850141.2
(22) Anmeldetag: 06.12.2005
(51) Int. Cl.: G06K 19/07

(54) **ERKENNUNGSSYSTEM**
IDENTIFICATION SYSTEM
SYSTEME D'IDENTIFICATION

(30) Priorität: 10.12.2004 DE 102004059465
(43) Veröffentlichungstag der Anmeldung: 05.09.2007
(73) Patentinhaber: PolyIC GmbH & Co. KG, 90763 Fürth (DE); Leonhard Kurz Stiftung & Co. KG, 90763 Fürth (DE)
(72) Erfinder: CLEMENS, Wolfgang, 90617 Puschendorf (DE); FIX, Walter, 90763 Fürth (DE); ULLMANN, Andreas, 90513 Zirndorf (DE); REINHART, Werner, 90513 Zirndorf (DE)
(74) Vertreter: Louis Pöhlau Lohrentz
(86) Internationale Anmeldenummer: PCT/DE2005/002197
(87) Internationale Veröffentlichungsnummer: WO 2006/061002

(56) Entgegenhaltungen:
- WO-A-99/54842
- WO-A-03/027948
- US-A1- 2004 233 065

## Beschreibung

Die Erfindung bezieht sich auf ein Erkennungssystem sowie eine Banknote oder ein ID-Dokument in Form eines flexiblen, mehrschichtigen Folienkörpers zur Verwendung in einem Erkennungssystem.

Es ist bekannt, mittels sogenannter RFID-Transponder (RFID = Radio Frequency Identification) Waren, Artikel oder Sicherheitsdokumente mit elektronisch auslesbaren Informationen zu versehen. Üblicherweise bestehen derartige RFID-Transponder im wesentlichen aus zwei Komponenten, einer Antenne und einem Siliziumchip. Antenne und Siliziumchip sind auf einem gemeinsamen Trägersubstrat montiert und mittels Kontaktierung elektrisch miteinander verbunden. Der von der Basisstation gesendete RF-Träger (RF-Radio Frequency) wird zur Basisstation rückgekoppelt und auf das rückgekoppelte Signal eine Identifizierungs-Information aufmoduliert.

Weiter ist in DE 101 41 440 C1 ein RFID-Transponder beschrieben, der - mit Ausnahme der Antenne - im wesentlichen aus organischen Bauelementen aufgebaut ist.

Das von einer Basisstation abgesendete Trägersignal wird in einen Antennen-Schwingkreis des RFID-Transponders eingekoppelt und sodann die induzierte Spannung gleichgerichtet. Die gleichgerichtete Spannung versorgt einen Logik-IC des RFID-Transponders, der einen Modulations-Transistor ansteuert. Der Modulations-Transistor wird von dem Logik-IC mit einer die Identifizierungs-Information darstellende Bit-Folge angesteuert, so dass die Dämpfung des Schwingkreises entsprechend dem binären Signal moduliert wird. Das sich hierdurch ändernde Abstrahlverhalten der Antenne wird von der Basisstation detektiert und als Antwortsignal des RFID-Transponders erfasst.

Organische Schaltkreise sind wesentlich langsamer als herkömmliche Schaltkreise auf Silizium-Basis, da organische Halbleiter in der Regel geringere Ladungsträgerbeweglichkeit als Silizium aufweisen und organische FeldeffektTransistoren auf dem Prinzip der Ladungsträger-Akkumulation, nicht dem Prinzip der Ladungsträger-Inversion basieren, worauf eine im Vergleich zu Silizium-Transistoren geringere Schaltgeschwindigkeit und ein unterschiedliches Schaltverhalten (z.B. Wechselspannungsuntauglichkeit) resultiert. Dies schränkt das Anwendungsgebiet von aus organischen Bauelementen zusammengesetzten Elektronikschaltungen ein und fordert - im Vergleich zu herkömmlichen auf Silizium-Technologie basierten Schaltkreisen - neuartige Schaltungskonzepte.

In WO 00/07151 wird weiter die Anwendung der RFID-Technologie zur Sicherung von Wertpapieren, beispielsweise Banknoten, Schecks, Aktien und dergleichen beschrieben. Das vom RFID-Transponder ausgesendete Ausgangssignal, das die Indentifizierungs-Informationen enthält, stellt ein Echtheitsmerkmal dar und wird zur Überprüfung der Echtheit des Sicherheitsdokuments überprüft. Das Ausgangssignal, das der RFID-Transponder bei Einkoppelung der Trägerfrequenz ausstrahlt, enthält z.B. die individuelle Seriennummer des Sicherheitsdokuments, die im Weiteren auch auf dem Sicherheitsdokument aufgedruckt ist. Durch Überprüfen dieser beiden Informationen wird festgestellt, ob es sich bei dem Sicherheitsdokument um eine Fälschung handelt oder nicht.

Ebenso wird in EP 1 134 694 A1 das Aufbringen eines Transponders auf ein Sicherheitsdokument beschrieben. Auch hier dient der Transponder als Merkmal zur Erkennung von Fälschungen oder zur Ortung des Dokuments.

Weiter beschreibt WO 03/057501 A1 auf ein Wert- oder Sicherheitsdokument eine elektronische Schaltung aufzubringen, wobei zumindest ein Element der elektronischen Schaltung auf das Wert- oder Sicherheitsdokument aufgedruckt ist. Dieser Aufdruck kann hierbei mittels elektrisch leitfähiger Druckfarben erfolgen.

Die elektronische Schaltung weist hierbei eine Energiequelle in Form einer gedruckten Batterie, einer Solarzelle oder einer Antenne auf. Weiter weist die elektronische Schaltung eine Ausgabeeinrichtung auf, beispielsweise eine LED. Eine Vorrichtung zur Überprüfung des Wert- oder Sicherheitsdokuments erfasst die Eigenschaften des von dieser Ausgabeeinrichtung abgestrahlten Feldes, vergleicht die Eigenschaften mit vorgegebenen Eigenschaften und bestimmt so, ob das Wert- oder Sicherheitsdokument echt ist oder nicht.

Ähnlich wie bei der oben beschriebenen Applizierung eines RFID-Transponders auf einem Sicherheitsdokument wird so ein vom Sicherheitsdokument ausgestrahltes Identifikationssignal zur Bestimmung der Echtheit des Sicherheitsdokuments überprüft.

Nachteilig bei derartigen Verfahren ist hierbei, dass die Überprüfung der Echtheit der Sicherheitsdokumente nur mit technisch aufwendigen Vorrichtungen durchführbar ist.

WO 03/05 4807 offenbart ein Sicherheitsdokument gemäβ dem Oberbegriff von Anspruch 1. Der Erfindung liegt die Aufgabe zugrunde, ein verbessertes Erkennungssystem, insbesondere zur Erkennung der Echtheit von Sicherheitsdokumenten anzugeben.

Diese Aufgabe wird von einer Banknote oder einem ID-Dokument nach Anspruch 1 gelöst.

Durch die Erfindung wird es ermöglicht, Banknoten oder ID-Dokumente bereit zu stellen, die sowohl ein hohes Maß an Fälschungssicherheit bieten, als auch kostengünstig hergestellt werden können und mit geringem Zeit- und Kostenaufwand auf ihre Echtheit überprüft werden können. Die Überprüfung der Banknoten oder ID-Dokumente gestaltet sich hierbei besonders einfach. Es ist beispielsweise nicht notwendig, eine von dem Sicherheitselement ausgegebene, unter Umständen eine Vielzahl von Ziffern umfassende Seriennummer zu überprüfen. Die Überprüfung des Sicherheitsmerkmals ist selbst für den Laien schnell und mit geringem Aufwand machbar. Das Sicherheitselement besteht aus einem flexiblen, mehrschichtigen Folienkörper mit aktiven und/oder passiven organischen Bauelementen, so dass eine Nachahmung des Sicherheitsmerkmals mittels allgemein zugänglicher Technologien, beispielsweise mittels elektronischer Schaltkreise basierend auf Silizium-Technologie, nur mit hohem Aufwand machbar oder zumindest sofort erkennbar ist.

Weiter ergibt sich durch die Erfindung die Möglichkeit, durch Erhöhung der Komplexität der Verifikationseinrichtung die Fälschungssicherheit im nachhinein ohne Vornahme von Änderungen in den Sicherheitselementen zu verbessern, beispielsweise in dem die Reaktion des Sicherheitselementes auf Änderungen des Verifikationssignals hin überprüft wird. Zur Erhöhung des Schutzes vor Fälschungen ist es somit nicht notwendig, eine Vielzahl von sich bereits im Umlauf befindlichen Banknoten oder ID-Dokumente zu ersetzen. Weiterhin kann hierdurch eine abgestufte Überprüfung des Sicherheitsmerkmals in Abhängigkeit von den jeweiligen Anforderungen realisiert werden.

Vorteilhafte Ausgestaltungen der Erfindung sind in den Unteransprüchen bezeichnet.

Die Verifikationseinrichtung kann zusätzlich über sensorische Elemente zur Erfassung von Einflüssen wie Druck, Temperatur, Feuchtigkeit verfügen.

Besonders vorteilhaft ist es, wenn als Ausgabeeinheit eine optische Ausgabeeinheit zur Ausgabe eines optischen Freigabesignals verwendet wird. Die Ausgabeeinheit weist beispielsweise ein oder mehrere elektrochrome Elemente, thermochrome Elemente, elektrophoretische Elemente oder flüssigkristalline Elemente (liquid Crystal = LC) oder organische Leuchtdioden auf. Das Freigabesignal ist so unmittelbar und eindeutig von dem Betrachter erfassbar. Weiter ist es auch möglich, das Freigabesignal akustisch oder über den Tastsinn, beispielsweise durch ein Piezo-Element oder einen Lautsprecher, olfaktorisch (z.B. Geruchssinn) oder thermisch (abkühlendes oder erhitzendes Elementes) dem Benutzer zu vermitteln. Weiter besteht die Möglichkeit, das Freigabesignal als maschinenlesbare Information auszugeben, die von der Verifikationseinrichtung erfasst werden kann. Es ist beispielsweise möglich, als Freigabesignal ein elektromagnetisches Signal auszugeben, dass von einem Empfänger (Antenne, Fotosensor, ...) der Verifikationseinrichtung erfasst werden kann. Eine Ausgabe eines elektrischen Signals über leitfähige Kontakte ist ebenfalls möglich. Weiter können die oben genannten Ausführungsvarianten miteinander kombiniert werden.

Die Empfangseinheit des Sicherheitselements weist vorzugsweise eine Antennenstruktur auf, die aus einer strukturierten elektrisch leitfähigen Schicht zum Empfang des elektromagnetischen Verifikationssignals besteht. Die Antennenstruktur ist hierbei in ihrer Größe und Formgebung an den von dem Verifikationssignal verwendeten Frequenzbereich und Kopplungsmethode angepasst. Weiter ist es hier auch möglich, zwei oder mehr Antennen, beispielsweise für unterschiedliche Frequenzen, vorzusehen. Verwendbare Frequenzbereiche sind z.B. 125-135 MHz, 13-14 MHz, 6-8 MHz, 20-40 MHz, 860-950 MHz oder 1,7 - 2,5 GHz. Die elektromagnetische Kopplung kann induktiv, kapazitiv oder durch Dipolwechselwirkung erfolgen, dies hängt vom Sender, der Antenne und dem Abstand zwischen Sender und Antenne ab. Als RF-Quellen können speziell hierfür aufgebaute Sender oder auch RFID Sender, Mobilfunk-Endgeräte, Funk-Schnittstellen, RF Fernsehsignale, sowie Infrarot- (IR) und UV-Quellen verwendet werden.

Weiter ist es auch möglich, dass das elektromagnetische Verifikationssignal im Bereich des sichtbaren Lichtes, im Infrarot-Bereich oder UV-Bereich liegt und die Empfangseinheit mit entsprechenden Sensoren, beispielsweise einer Fotodiode oder Solarzelle, zum Empfang einer derartigen elektro-magnetischen Strahlung versehen ist. Vorzugsweise sind solche Sensoren zumindest teilweise aus organischen Schichten aufgebaut.

Die Freischalteelektronik besteht vorzugsweise aus einer oder mehreren drucktechnisch erzeugten Schichten, die Schichten aus organisch leitfähigen und/oder halbleitenden Materialien umfassen. Die Freischalteelektronik umfasst hierbei vorzugsweise passive organische Bauelemente, beispielsweise organische Dioden, sowie aktive organische Bauelemente, beispielsweise organische Feldeffekttransistoren oder organische Speicherelemente.

Im einfachsten Fall überprüft die Freischalteelektronik, ob die Frequenz und/oder die Amplitude des empfangenen Signals, einem vorbestimmten Wert entspricht. Im einfachsten Fall kann das Signal somit allein eine bestimmte weitgehend festliegende RF-Trägerfrequenz besitzen So bestimmt die Freischalteelektronik beispielsweise mittels eines Bandpasses und eines nachgeschalteten Fensterdiskriminators, ob das empfangene Signal Signalanteile (einer vorbestimmten Feldstärke) in einem vorbestimmten Frequenzbereich besitzt. Durch Parallelschaltung mehrere derartige Schaltungen, die unter Umständen mittels eines Logik-Gatters miteinander verbunden sind, lässt sich das Vorliegen komplexer Signalformen unter Verwendung organischer Bauelemente überprüfen.

Weiter ist es möglich, dass die Freischalteelektronik das von der Empfangseinheit empfangene Signal daraufhin überprüft, aus welcher Richtung das Signal auf das Sicherheitselement trifft und die Ausgabeeinheit zur Ausgabe des Freigabesignals nur dann ansteuert, wenn das von der Empfangseinheit empfangene Signal aus einer vorbestimmten Richtung auf das Sicherheitselement trifft. So ist es beispielsweise möglich, dass die Empfangseinheit mehrere, in einer Phased-Array Anordnung angeordnete Antennenstrukturen aufweist, die mit der Freischalteelektronik verbunden sind. Nach Auswertung der von den verschiedenen Antennenstrukturen empfangenen Signale ist es der Freischalteelektronik möglich, die Einfallsrichtung des Verifikationssignals zu bestimmen. Das Freigabesignal wird nur dann ausgegeben, wenn das Sicherheitselement in einer speziellen Position zur Verifikationseinrichtung gehalten wird. Wird beispielsweise das Sicherheitselement gedreht, so leuchtet eine ein Freigabesignal ausgebende organische Leuchtdiode oder etwaiges anderes Ausgabelement nur unter einer speziellen Winkelposition zur Verifikationseinrichtung auf.

Gemäß eines weiteren vorteilhaften Ausführungsbeispiels der Erfindung erfolgt die Ausgabe des Freigabesignals nur dann, wenn eine vorbestimmte Kombination von verschiedenartigen, erfassbaren elektromagnetischen Eingangssignalen vorliegt. Das Verifikationssignal besteht so aus einer speziellen Kombination von verschiedenartigen Eingangssignalen, beispielsweise RF + Licht oder RF + IR. Die Freischaltelektronik überprüft die Kombination der Eingangssignale daraufhin, ob sie die spezifische Kombination, enthält oder nicht enthält und steuert die Ausgabeeinheit entsprechend an.

Gemäß eines weiteren bevorzugten Ausführungsbeispiels der Erfindung überprüft die Freischalteelektronik, ob die Änderung der Frequenz, der Phase und/oder der Amplitude des empfangenen Signals vorbestimmten Werten entspricht. Beispielsweise ermittelt die Freischalteelektronik mittels der oben beschriebenen Baugruppe in bestimmten Zeitabständen die Signalstärke in bestimmten Frequenzbändern, vergleicht diese mit bestimmten Schwellwerten und speichert das so gewonnene Signal in einem als Zwischenspeicher dienenden Schieberegister. Durch den Vergleich des in dem Schieberegister gespeicherten Signalmusters mit einem in einem organischen Speicher gespeicherten Signalmuster wird sodann bestimmt, ob die Änderung der Signalform des empfangenen Signals vorbestimmten Weiten entspricht.

Weiter ist es auch möglich, dass die Freischalteelektronik das von der Empfangseinheit empfangene Signal demoduliert und ein in dem demodulierten Signal enthaltenes Codewort daraufhin überprüft, ob es der speziellen Codierung entspricht. Das von der Empfangseinheit empfangene Signal wird so beispielsweise einem Tiefpass zugeführt, in ein binäres Signal gewandet und mit einem in einem organischen Speicher gespeicherten vorbestimmten Code verglichen.

Das Sicherheitselement weist weiter eine Energieversorgungseinheit zur Speisung der Freischalteelektronik und der Ausgabeeinheit auf. Die Energieversorgungseinheit besteht beispielsweise aus einer Batterie, einer Solarzelle, oder auch aus einer Antenne mit nachgeschaltetem Gleichrichtung und Speicherkondensator zur Einkopplung eingestrahlter HF-Energie (HF = High Frequency).

Weiter können auch verschiedene Energieversorgungseinheiten kombiniert werden, z. B. wiederaufladbare Batterien mit Solarzellen. Es ist hierbei vorteilhaft, all diese Elemente in dem mehrschichtigen Folienkörper zu integrieren.

Weiter ist es auch möglich, dass das Sicherheitselement optional eine Sensoreinheit aufweist, mittels der beispielsweise Druck, Temperatur oder Feuchtigkeit erfasst und als Eingangssignal der Freischalteelektronik zugeführt werden. Das Aussenden des Freigabesignals erfolgt sodann auch in Abhängigkeit von den von diesen Sensoren ermittelten Werten.

Im Folgenden wird die Erfindung beispielhaft anhand mehrerer Ausführungsbeispiele durch Zuhilfenahme der beiliegenden Zeichnungen erläutert.
- Fig. 1: zeigt eine schematische Darstellung eines erfindungsgemäßen Erkennungssystems mit einer Verifikationseinrichtung und einem Sicherheitselement.
- Fig. 2: zeigt ein Blockdiagramm des Sicherheitselements nach Figur 3.
- Fig. 3: zeigt eine schematische Darstellung des Aufbaus eines erfindungsgemäßen Sicherheitselements.

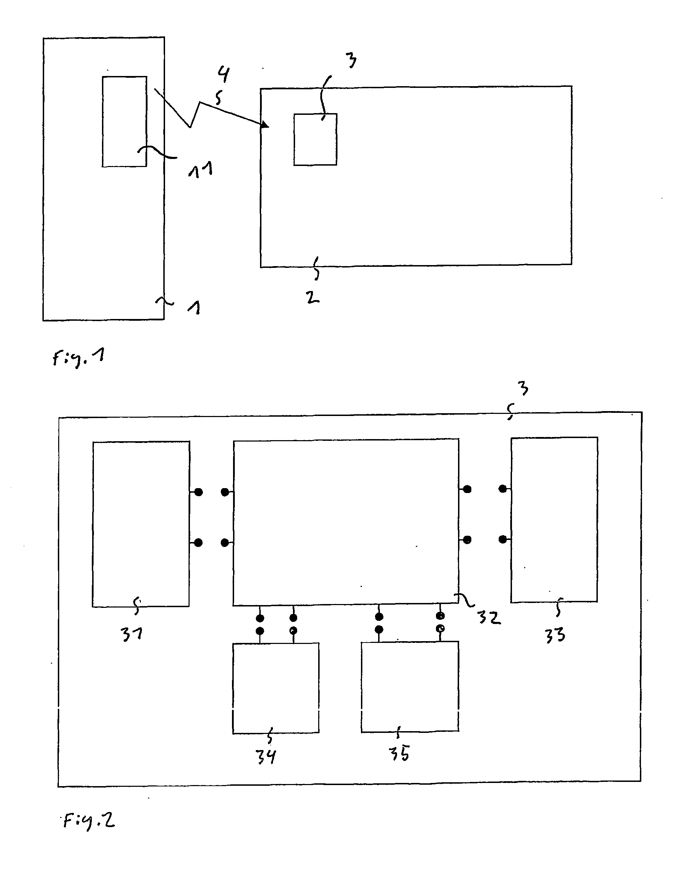

Fig. 1 zeigt ein Erkennungssystem mit einer Verifikationseinrichtung 1, mit einem zu sichernden Gegenstand 2 und mit einem Sicherheitselement 3.

Bei dem zu sichernden Gegenstand 2 handelt es sich gemäβ der Erfindung um ein Sicherheitsdokument wie ein ID-Dokument oder eine Banknote. Auf den zu sichernden Gegenstand 2 ist das Sicherheitselement 3 beispielsweise durch Heißprägen, Kaschieren, Aufkleben oder Laminieren aufgebracht. Das Sicherheitselement 3 wird so beispielsweise auf ein Trägermaterial des zu sichernden Gegenstand oder auf die Produktoberfläche selbst, beispielsweise auf Papier, Pappe, beschichtetes Papier, einen Kunststoff, eine Kunststofffolie z. B. aus Polyester oder PVC, oder eine beschichtete Folie appliziert. Weiter ist es auch möglich, das das Sicherheitselement 3 in den zu sichernden Gegenstand integriert wird, beispielsweise indem das Sicherheitselement zwischen zwei Kunststoffschichten des zu sichernden Gegenstandes einlaminiert wird.

Das Sicherheitselement 3 besteht aus einem mehrschichtigen, flexiblen Folienkörper mit ein oder mehreren elektrischen Funktionsschichten. Die elektrischen Funktionsschichten des Folienkörpers bestehen aus (organisch) leitfähigen Schichten, organisch halbleitenden Schichten, und/oder aus organischen Isolatorschichten, die, zumindest teilweise in strukturierter Form, übereinander angeordnet sind. Neben diesen elektrischen Funktionsschichten umfasst der mehrschichtige Folienkörper optional noch ein oder mehrere Trägerschichten, Schutzschichten, Dekorlagen, Haftvermittlungsschichten oder Klebeschichten.

Die elektrisch leitfähigen Funktionsschichten bestehen vorzugsweise aus einer leitfähigen, strukturierten Metallisierung, vorzugsweise aus Gold oder Silber. Es kann jedoch auch vorgesehen sein, diese Funktionsschichten aus einem anorganischen elektrisch leitfähigen Material auszubilden, beispielsweise aus Indium-Zinn-Oxid, oder aus einem leitfähigen Polymer, beispielsweise aus Polyanilin oder Polypyrol.

Die organische halbleitende Funktionsschichten bestehen beispielsweise aus konjungierten Polymeren, wie Polythiophenen, Polythienylenvinylenen oder Polyfluorenderivaten, die aus Lösung durch Spin-Coating, Rakeln oder Bedrucken aufgebracht werden. Als organische Halbleiterschicht eignen sich auch sog. "small molecules", d.h. Oligomere wie Sexithiophen oder Pentacen, die durch eine Vakuumtechnik aufgedampft werden. Diese organischen Schichten werden bevorzugt durch ein Druckverfahren (Tiefdruck, Siebdruck, Tampondruck) bereits partiell oder musterförmig strukturiert aufgebracht. Dazu sind die für die Schichten vorgesehenen organischen Materialien als lösbare Polymere ausgebildet, wobei der Begriff des Polymers hierbei, wie weiter oben bereits beschrieben, auch Oligomere und "small moleculs" einschließt.

Die Verifikationsseinrichtung 1 weist eine Sendeeinrichtung 11 auf, die ein erfindungsgemäβes elektromagnetischen Verifikationssignal 4 aussendet. Bei der Verifikationseinrichtung 1 kann es sich um ein spezielles, für die Überprüfung der Echtheit des Sicherheitselements 3 entwickeltes Gerät handeln. Es ist jedoch auch möglich, dass es sich bei der Verifikationseinrichtung um ein lediglich zusätzlich für diesen Zweck genutztes Gerät handelt. So kann es sich bei der Verifikationseinrichtung 1 beispielsweise um ein Mobilfunkendgerät, Computer oder PDA (=Personal Digital Assistant) handelt. Die Sendeeinrichtung wird in diesem Fall von einem GSM/ UMTS Transceiver oder einem Transceiver für einer Funkschnittstelle für den Nahbereich, beispielsweise Bluetooth, gebildet.

Durch die Interaktion der elektrischen Funktionsschichten des Sicherheitselements 3 werden beim Auftreffen des elektromagnetischen Verifikationssignals 4 auf das Sicherheitselement 3 die im Folgenden anhand von Fig. 2 beschriebenen elektrischen Funktionen des Sicherheitselements 3 erbracht.

Fig 2 zeigt eine elektrisch-funktionelle, schematische Darstelle des Sicherheitselements 3 mit verschiedenen in dem Sicherheitselement 3 implementierten elektrischen Funktionsgruppen 31 bis 35.

Wie in Fig. 2 angedeutet, bilden die Funktionsgruppen 31 bis 35 vorzugsweise getrennte Systeme, die über elektrische Kontaktpunkte miteinander verbunden sind.

Die elektrische Funktionsgruppe 31 ist eine Empfangseinheit 31 zum Empfang des Verifikationssignals 4. Wird als Verifikationssignal 4 ein RF Signal verwendet, so besteht die Funktionsgruppe 31 aus einer an den Frequenzbereich und die beabsichtigte Kopplungsmethode des Verifikationssignals 4 angepasste Antennenstruktur. Diese wird von ein oder mehreren strukturierten, elektrisch leitfähigen Schichten oder Schichtbereichen des mehrschichtigen flexiblen Folienkörpers gebildet.

Die elektrische Funktionsgruppe 34 weist eine oder mehrere Sensor auf, die zusätzliche Eingangssignale erfassen. Diese Sensoren erfassen hierbei beispielsweise Druck, Temperatur, sichtbares Licht, UV- Strahlung oder IR-Strahlung und leiten ein die erfassten Größen wiedergebendes elektrisches Signal an die Funktionsgruppe 34 weiter. Auf die Funktionsgruppe 34 könnte auch verzichtet werden.

Die elektrische Funktionsgruppe 35 ist eine Energieversorgungseinheit. Auf die elektrische Funktionsgruppe 35 kann auch verzichtet werden, falls die in der Funktionsgruppe 31 eingekoppelte Energie des Verifikationssignals 4 zum Betrieb der übrigen Funktionsgruppen 32, 33 und u. U. 34 verwendet wird.

Die elektrische Funktionsgruppe 33 ist eine Ausgabeeinheit 33 zur Ausgabe eines Freigabesignals. Bevorzugt umfasst die Funktionsgruppe 33 ein elektrochromes Element, ein thermochromes Element, ein elektrolumeneszentes Element, ein elektrophosphoreszierendes Element, ein Flüssigkristall-Element oder eine organische Leuchtdiode, die auf ein entsprechendes elektrisches Eingangssignal ein optisches Freigabesignal ausgeben. Die elektrische Funktionsgruppe 33 wird so im Regelfall von 3 oder mehr übereinanderliegenden Schichten oder Schichtbereichens des flexiblen mehrschichten Folienkörpers gebildet, die zwei strukturierte elektrisch leitfähige Elektrodenschichten und zumindest eine dazwischenliegende, optisch aktive Schicht umfassen. Es ist hierbei auch möglich, dass die elektrische Funktionsgruppe 33 zwei oder mehr derartige, miteinander verschaltete Elemente aufweist. Zusätzlich kann die Funktionsgruppe 33 auch ein Piezo-Element zur Erzeugung eines Schallsignals oder eines taktil erfassbaren Signals und/ oder ein Element zur Erzeugung eines thermisch oder durch den Geruchssinn erfassbaren Signals aufweisen.

Die elektrische Funktionsgruppe 32 ist eine Freischaltelektronik, die eine oder mehrere aktive und/oder passive, miteinander verschalte organische Bauelemente umfasst. Die elektrische Funktionsgruppe 32 wird so von mindestens 3 übereinanderliegenden Schichten oder Schichtbereichens des flexiblen mehrschichten Folienkörpers gebildet, die zumindest zwei strukturierte elektrisch leitfähige Elektrodenschichten und mindestens eine dazwischenliegende elektrische Funktionsschicht aufweisen. Hierdurch werden ein oder mehrere aktive und/oder passive, miteinander verschaltene organische Bauelemente gebildet. Die Freischalteelektronik umfasst hierbei vorzugsweise passive organische Bauelemente, beispielsweise organische Dioden, sowie aktive organische Bauelemente, beispielsweise organische Feldeffekttransistoren oder organische Speicherelemente.

Im einfachsten Fall bildet die Funktionsgruppe 32 zusammen mit der Funktionsgruppe 31 einen von einer Antenne und einem organischen Kondensator gebildeten selektiven Schwingkreis, der nur mit einer ganz speziellen Frequenz- /Frequenzbandbreite angeregt werden kann. Für den Fall der geeigneten Frequenz wird ein optisches Element des Funktionsgruppe durch einen von der Funktionsgruppe 33 angelegten Strom oder Spannung verändert. Vorzugsweise wird das optische Element hierbei durch einen Gleichstrom oder eine Gleichspannung verändert, die durch organische Bauelemente, z. B. einer organischen Diode, erzeugt werden. Die Funktionsgruppe 32 kann hierbei weiter einen als Fensterdiskriminator verschalteten organischen Feldeffekttransistor aufweisen, der die Funktionsgruppe 32 ansteuert. Dieser organische Feldeffekttransistor kann hierbei weiter mit ein oder mehreren vorgelagerten, einen weiteren Bandpass realisierenden organischen Bauelemente, einer der Energieversorgung oder der Selektierung weiterer Frequenzen dienenden zusätzlichen Koppelantenne oder einer sonstigen Energieversorgung verbunden sein.

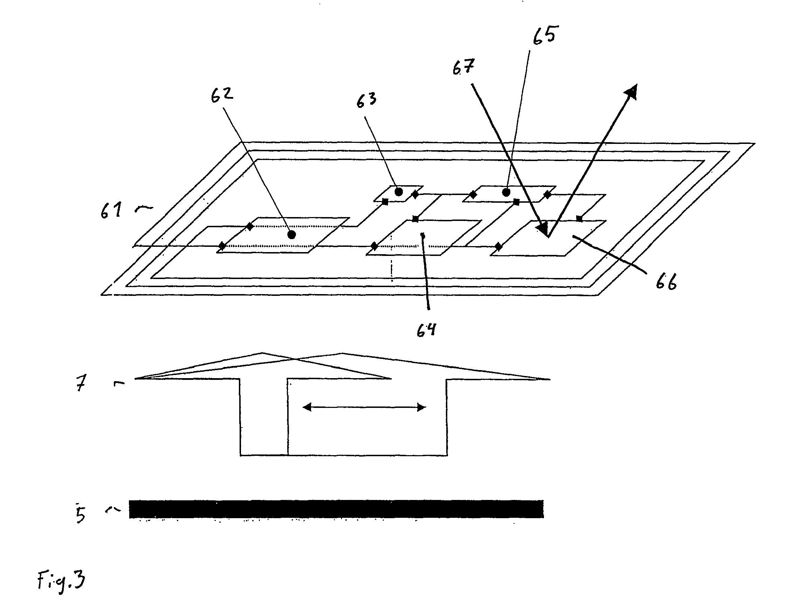

Fig. 3 zeigt eine schematische Darstellung einer weiteren elektrisch-funktionellen Ausgestaltung des Sicherheitselements 3.

Fig. 3 zeigt eine Sendeeinrichtung 5, ein Verifikationssignal 5 und mehrere, durch die Interaktion der elektrischen Funktionsschichten des mehrschichtigen Folienkörpers implementierte und miteinander verbundene elektrische Bauelemente 61 bis 66. Durch die in Fig. 3 gewählte Darstellung wird die räumliche Anordnung dieser elektrischen Bauelemente zu einer vertikalen Schnittebene des mehrschichtigen Folienkörpers angedeutet.

Bei dem Bauelement 61 handelt es sich um eine Antenne. Bei dem Bauelement 62 handelt es sich um einen organischen Kondensator. Die Bauelemente 63 und 64 bilden einen, z. B. eine organische Diode und einen organischen Feldeffekttransitor aufweisenden organischen Gleichrichter. Das Bauelement 65 ist ein organisches Schaltungselement, das eine Logik-Operation implementiert.

Wie in Fig. 3 angedeutet, Ändert sich die Signalform, hier die Amplitude, des von der Sendeeinrichtung 5 auf das Sicherheitselement abgestrahlten elektromagnetischen Signals.

Der von den Bauelementen 61 und 62 gebildete selektive Schwingkreis ist so ausgelegt, dass er von dem Sender 5 nur mit einer bestimmten Frequenz oder innerhalb eines spezifischen, eng begrenzten Frequenzbandes angeregt werden kann. Die an dem Schwingkreis anliegende Spannung wird über den organischen Gleichrichter abgegriffen und dem organischen Schaltungselement 65 zugeführt. Das in dem Signal 7 mittels Amplitudenmodulation kodiert enthaltene spezifische Codewort wird von dem organischen Schaltungselement 65 daraufhin überprüft, ob sie einem vorzugsweise in einem organischen Speicher abgespeicherten vorbestimmten Codewort entspricht. Diese Überprüfung wird vorzugsweise durch ein Schieberegister und ein mit diesem und dem organischen Speicher verbundenen Komparator mit nachgeschaltetem, als Treiber fungierenden organischen Feldeffekttransistor realisiert. Ist dies der Fall, so wird ein Strom oder eine Spannung an das Bauelement 66 angelegt, bei dem es sich um ein optisches Element handelt. Durch die angelegten Strom oder die angelegte Spannung ändern sich die optischen Eigenschaften des Bauelements 66, so dass in das von dem Bauelement 66 reflektierte Licht ein dem Benutzer erkennbares Freigabesignal kodiert ist.

## Patentansprüche

1. Banknote oder ID-Dokument mit einem Sicherheitselement (3) in Form eines flexiblen mehrschichtigen Folienkörpers,
wobei das Sicherheitselement (3) eine Empfangseinheit (31) zum Empfang eines ein Codewort enthaltendes modulierten elektromagnetischen Verifikationssignals (4) von einer Verifikationseinrichtung (1), eine Ausgabeeinheit (33) zur Ausgabe eines Freigabesignals und eine aktive und/oder passive organische Bauelemente aufweisende Freischalteelektronik (32) enthält,
**dadurch gekennzeichnet,**
**dass** die Freischalteelektronik (32) so ausgestaltet ist, dass sie bei Empfang eines derartigen Verifikationssignals überprüft, ob die Frequenz und/oder die Amplitude des Signals einem vorbestimmten Wert entspricht und/oder die Änderung der Frequenz und/oder die Änderung der Phase und/oder die Änderung der Amplitude des Signals vorbestimmten Werten entsprechen und/oder das Signal aus einer vorbestimmten Kombination von verschiedenartigen elektromagnetischen Eingangssignalen besteht, und dass sie die Ausgabeeinheit (33) zur Ausgabe des Freigabesignals ansteuert, wenn das von der Empfangseinheit empfangene Signal zumindest einem dieser vorbestimmten Werte entspricht und/oder das Signal aus einer vorbestimmten Kombination von verschiedenartigen elektromagnetischen Signalen besteht.

2. Banknote oder ID-Dokument nach Anspruch 1,
**dadurch gekennzeichnet,**
**dass** die Ausgabeeinheit ein Piezo-Element zur Erzeugung eines Schallsignals oder eines taktil erfassbaren Signals aufweist.

3. Banknote oder ID-Dokument nach Anspruch 1 oder 2,
**dadurch gekennzeichnet,**
**dass** die Ausgabeeinheit zur Erzeugung eines thermisch oder durch den Geruchssinn erfassbaren Signals ausgestaltet ist.

4. Banknote oder ID-Dokument nach einem der vorgehenden Ansprüche,
**dadurch gekennzeichnet,**
**dass** die Empfangseinheit (31) eine Antennenstruktur bestehend aus einer strukturierten elektrisch leitfähigen Schicht zum Empfang des elektromagnetischen Verifikationssignals umfasst.

5. Banknote oder ID-Dokument nach einem der vorgehenden Ansprüche,
**dadurch gekennzeichnet,**
**dass** die Freischalteelektronik (51) das von der Empfangseinheit (31) empfangene Signal daraufhin überprüft, aus welcher Richtung das Signal auf das Sicherheitselement (3) trifft und die Ausgabeeinheit (33) zur Ausgabe des Freigabesignals ansteuert, wenn das von der Empfangseinheit (31) empfangene Signal aus einer vorbestimmten Richtung auf das Sicherheitselement (3) trifft.

6. Banknote oder ID-Dokument nach einem der vorgehenden Ansprüche,
**dadurch gekennzeichnet,**
**dass** die Freischalteelektronik (53) derart ausgestaltet ist, dass sie das von der Empfangseinheit (31) empfangene Signal daraufhin überprüft, ob das in dem modulierten Signal enthaltene Codewort mit einem in einem Speicher des Sicherheitselements gespeicherten vorbestimmten Codewort übereinstimmt.

7. Banknote oder ID-Dokument nach einem der vorgehenden Ansprüche,
**dadurch gekennzeichnet,**
**dass** die Freischalteelektronik (32) aktive und/oder passive organische Bauelemente umfasst.

8. Banknote oder ID-Dokument nach einem der vorgehenden Ansprüche,
**dadurch gekennzeichnet,**
**dass** die Freischalteelektronik (32) eine oder mehrere drucktechnisch erzeugte Schichten aus organischen leitfähigen und/oder halbleitenden Materialien umfasst.

9. Banknote oder ID-Dokument nach einem der vorgehenden Ansprüche,
**dadurch gekennzeichnet,**
**dass** das Sicherheitselement weiter eine Energieversorgungseinheit (35) aufweist.

10. Banknote oder ID-Dokument nach einem der vorgehenden Ansprüche,
**dadurch gekennzeichnet,**
**dass** das Sicherheitselement (3) weiter eine Sensoreinheit (34) aufweist.

11. Banknote oder ID-Dokument nach einem der vorgehenden Ansprüche,
**dadurch gekennzeichnet,**
**dass** die Empfangseinheit (39), die Ausgabeeinheit (33) und die Freischalteelektronik (32) getrennte Systeme bilden, die über elektrische Kontaktpunkte miteinander verbunden sind.

12. Erkennungssystem,
**dadurch gekennzeichnet,**
**dass** das Erkennungssystem eine Verifikationseinrichtung (1) mit einer Sendeeinheit (11) zum Aussenden eines ein Codewort enthaltendes modulierten elektromagnetischen Verifikationssignals (4) und mindestens eine Banknote oder ID-Dokument nach Anspruch 1 aufweist.

## Claims

1. Bank note or identification document having a security element (3) in the form of a flexible, multilayer film body, wherein the security element (3) contains a receiving unit (31) for receiving a modulated, electromagnetic verification signal (4) of a verification device (1) said verification system containing a code word, a display unit (33) for displaying a release signal, and active and/or passive isolation electronics (32) having organic components,
**characterised in that**,
the isolation electronics (32) are arranged in such a way that, when such a verification signal is being received, they monitor whether the frequency and/or amplitude of the signal corresponds to a predetermined value and/or the change in frequency and/or change in phase and/or change in amplitude of the signal correspond to predetermined values and/or the signal consists of a predetermined combination of various electromagnetic input signals, and **in that** they activate the display unit (33) for displaying the release signal, if the signal received by the receiving unit corresponds to at least one of these predetermined values and/or the signal consists of a predetermined combination of various electromagnetic signals.

2. Bank note or identification document according to claim 1,
**characterised in that**,
the display unit has a Piezo element for generating an acoustic signal or a signal that can be detected by touch.

3. Bank note or identification document according to claim 1 or 2,
**characterised in that**,
the display unit is arranged for generating a thermal signal or a signal that can be detected by smell.

4. Bank note or identification document according to one of the preceding claims,
**characterised in that**,
the receiving unit (31) comprises an antennae structure consisting of a structured electrically conductive layer for receiving the electromagnetic verification signal.

5. Bank note or identification document according to one of the preceding claims,
**characterised in that**,
the isolation electronics (51) hereupon monitors the signal received by the receiving unit (31), from which direction the signal strikes the security element (3) and activates the display unit (33) for displaying the release signal, if the signal received by the receiving unit (31) strikes the security element (3) from a predetermined direction.

6. Bank note or identification document according to one of the preceding claims,
**characterised in that**,
the isolation electronics (53) are arranged in such a way that they hereupon monitor the signal received by the receiving unit (31) as to whether the code word contained in the modulated signal is in accordance with a predetermined code word saved in a storage device of the security element.

7. Bank note or identification document according to one of the preceding claims,
**characterised in that**,
the isolation electronics (32) comprise active and/or passive organic components.

8. Bank note or identification document according to one of the preceding claims,
**characterised in that**,
the isolation electronics (32) comprise one or more typographically generated layers made from organic conductive and/or semi-conductive materials.

9. Bank note or identification document according to one of the preceding claims,
**characterised in that**,
the security element has a further energy supply unit (35).

10. Bank note or identification document according to one of the preceding claims,
**characterised in that**,
the security element (3) has a further sensor unit (34).

11. Bank note or identification document according to one of the preceding claims,
**characterised in that**,
the receiving unit (39), the display unit (33) and the isolation electronics (32) form separate systems that are linked to one another by electrical contact points.

12. Identification system,
**characterised in that**,
the identification system has a verification device (1) having a transmitter unit (11) for transmitting a modulated, electromagnetic verification signal (4) containing a code word and at least one bank note or identification document according to claim 1.

## Revendications

1. Billet de banque ou document d'identité comportant un élément de sécurité (3) se présentant sous la forme d'un corps de film multicouche flexible,
sachant que l'élément de sécurité (3) contient une unité de réception (31) servant à recevoir un signal de vérification (4) électromagnétique modulé contenant un mot de code transmis par un dispositif de vérification (1), une unité de sortie (33) servant à produire un signal d'autorisation et une électronique de libération (32) présentant des composants organiques actifs et/ou passifs,
**caractérisé en ce**
**que** l'électronique de libération (32) est configurée de telle manière qu'elle vérifie lors de la réception d'un tel signal de vérification si la fréquence et/ou l'amplitude du signal correspondent à une valeur prédéfinie et/ou si la variation de fréquence et/ou la variation de phase et/ou la variation de l'amplitude du signal correspondent à des valeurs prédéfinies et/ou si le signal est constitué d'une combinaison prédéfinie de signaux d'entrée électromagnétiques de divers types,
et en ce que ladite électronique de libération commande l'unité de sortie (33) servant à produire le signal d'autorisation lorsque le signal reçu par l'unité de réception correspond au moins à une des ces valeurs prédéfinies et/ou lorsque le signal est constitué d'une combinaison prédéfinie de signaux électromagnétiques de divers types.

2. Billet de banque ou document d'identité selon la revendication 1,
**caractérisé en ce**
**que** l'unité de sortie présente un élément piézoélectrique servant à générer un signal acoustique ou un signal pouvant être détecté tactilement.

3. Billet de banque ou document d'identité selon la revendication 1 ou 2,
**caractérisé en ce**
**que** l'unité de sortie est configurée pour générer un signal pouvant être détecté thermiquement ou par le sens de l'odorat.

4. Billet de banque ou document d'identité selon l'une quelconque des revendications précédentes,
**caractérisé en ce**
**que** l'unité de réception (31) comporte une structure d'antennes constituée d'une couche structurée électroconductrice servant à recevoir le signal de vérification électromagnétique.

5. Billet de banque ou document d'identité selon l'une quelconque des revendications précédentes,
**caractérisé en ce**
**que** l'électronique de libération (51) vérifie la direction du signal reçu par l'unité de réception (31) en provenance de laquelle le signal parvient à l'élément de sécurité (3), et en ce que ladite électronique de libération commande l'unité de sortie (33) servant à produire le signal d'autorisation lorsque le signal reçu par l'unité de réception (31) en provenance d'une direction prédéfinie parvient à l'élément de sécurité (3).

6. Billet de banque ou document d'identité selon l'une quelconque des revendications précédentes,
**caractérisé en ce**
**que** l'électronique de libération (53) est configurée de telle manière qu'elle vérifie pour le signal reçu par l'unité de réception (31) si le mode de code contenu dans le signal modulé concorde avec un mot de code prédéfini enregistré dans une mémoire de l'élément de sécurité.

7. Billet de banque ou document d'identité selon l'une quelconque des revendications précédentes,
**caractérisé en ce**
**que** l'électronique de libération (32) comporte des composants organiques actifs et/ou passifs.

8. Billet de banque ou document d'identité selon l'une quelconque des revendications précédentes,
**caractérisé en ce**
**que** l'électronique de libération (32) comporte une ou plusieurs couches générées par une technique de pression, constituées de matériaux organiques conducteurs et/ou semi-conducteurs.

9. Billet de banque ou document d'identité selon l'une quelconque des revendications précédentes,
**caractérisé en ce**
**que** l'élément de sécurité présente en outre une unité d'alimentation en énergie (35).

10. Billet de banque ou document d'identité selon l'une quelconque des revendications précédentes,
**caractérisé en ce**
**que** l'élément de sécurité (3) présente en outre une unité de détection (34).

11. Billet de banque ou document d'identité selon l'une quelconque des revendications précédentes,
**caractérisé en ce**
**que** l'unité de réception (39), l'unité de sortie (33) et l'électronique de libération (32) forment des systèmes séparés, qui sont reliés les unes aux autres par l'intermédiaire de points de contact électriques.

12. Système d'identification,
**caractérisé en ce**
**que** le système d'identification présente un dispositif de vérification (1) doté d'une unité émettrice (11) servant à émettre un signal de vérification (4) électromagnétique modulé contenant un mot de code et au moins un billet de banque ou un document d'identité selon la revendication 1.
